# EUROPÄISCHE PATENTSCHRIFT

(11) **EP 2 213 992 B1**
(45) Veröffentlichungstag und Bekanntmachung des Hinweises auf die Patenterteilung: **24.04.2013**
(21) Anmeldenummer: 10000093.4
(22) Anmeldetag: 08.01.2010
(51) Int. Cl.: G01G 3/12, G01L 1/24, B65D 90/50

(54) **Vorrichtung zur Gewichtsbestimmung des Siloinhaltes eines Silos**
Device for determining the weight of the content of a silo
Dispositif de détermination du poids du contenu d'un silo

(30) Priorität: 28.01.2009 DE 102009006531
(43) Veröffentlichungstag der Anmeldung: 04.08.2010
(73) Patentinhaber: P+W Metallbau GmbH & Co. KG, 88074 Meckenbeuren (DE)
(72) Erfinder: Auer, Jürgen, 88069 Tettnang (DE); Lang, Wolfgang, 88069 Tettnang (DE)
(74) Vertreter: Riebling, Peter

(56) Entgegenhaltungen:
- EP-A2- 0 120 999
- WO-A1-86/05273
- CN-A- 101 105 409
- US-A- 5 012 679

## Beschreibung

Mit der DE 101 29 687 C1 ist eine Vorrichtung zur Gewichtsbestimmung eines Silos bekannt, die eine Mehrzahl von Gewichtssensoren umfasst, die an der Trägerkonstruktion (Silozarge) des Silobehälters angebracht sind und an eine Auswerteeinrichtung angeschlossen sind.

Zur Füllstandsmessung ist es bekannt, das Gesamtgewicht des Silobehälters samt Füllung durch Kraftsensoren zu erfassen, welche zwischen den eigentlichen Silobehälter und die diesen tragende Trägerkonstruktion eingesetzt sind. Eine derartige Messeinrichtung ist jedoch aufwendig, kostspielig und lässt sich insbesondere an bestehenden Siloanlagen nicht nachrüsten.

Eine Möglichkeit, bestehende Silos mit einer Gewichtsmesseinrichtung nachzurüsten, besteht darin, Halbleiter-Dehnungsmessstreifen (DMS) an der Tragkonstruktion anzubringen. Diese Sensoren messen die durch die Gewichtsbelastung bedingte elastische Verformung der Trägerkonstruktion und geben ein entsprechendes elektrisches Messsignal ab, welches weiter verarbeitet werden kann.

Eine solche Gewichtsmesseinrichtung ist beispielsweise aus der DE 37 25 332 C2 bekannt.

Eine spezielle Ausführungsform von Silos sind die sogenannten Standzargensilos. Diese haben als Tragkonstruktion anstelle eines Strebengerüstes eine umlaufend geschlossene, im Wesentlichen rohrförmige Standzarge, die sogenannte Silozarge. Wenn man gleichmäßig am Umfang verteilte Wägezellen zwischen dem Standring - auf dem das Silo ruht - und dem Fundamentring anbringt, besteht der Nachteil, dass die punktuellen Verbindungsbereiche starke Spannungen in die Silowand einleiten und deshalb besonders verstärkt werden müssen.

Als Silounterstützungskonstruktion kann auch ein Wiegering, ein Stahlbau oder Betonstuhl eingesetzt werden.

Mit dem Gegenstand der DE 101 29 687 C1 werden deshalb gleichmäßig am Umfang verteilt eine Anzahl von Gewichtssensoren angebracht, deren Ausgangssignale integriert werden.

Nachteil bei dieser Ausführung ist jedoch die Ungenauigkeit der Messung und die Tatsache, dass das Silo bedingt durch Sonneneinstrahlung und Schattenwurf sich im Bereich der Silozarge ungleichmäßig verformt und deshalb auch das Messsignal der Gewichtssensoren nur ungenau das Gewicht des Silos wiedergibt.

Mit der chinesischen Druckschrift CN 101105409 A wird eine Wiegevorrichtung für ein pulverförmiges Material offenbart, wobei die Vorrichtung einen Rohmaterialtank und eine Waagschale aufweist. Unterhalb des Wiegebunkers ist ein gitterartiger Lichtwellenleiter-Drucksensor angeordnet, wobei die durch den Drucksensor gewonnen Signale zur Steuerung einer Vakuumpumpe dienen.
Nachteil bei der D1 ist, dass der optische Messsensor zwar in einer Ausnehmung aber nur punktuelle angeordnet ist, was zu einem ungenauen Messergebnis führt. Bei einer gleichmäßigen punktuellen Anordnung des Messsensors zwischen dem Standring und dem Fundamentring müssen die Verbindungsbereiche verstärkt werden, da sonst hohe Spannungen in der Silowand auftreten.

Der Erfindung liegt deshalb die Aufgabe zu Grunde, eine Messvorrichtung zur Gewichtsbestimmung eines Siloinhalt so weiterzubilden, dass eine sicherere, einfachere und genauere Gewichtsmessung gegeben ist.

Zur Lösung der gestellten Aufgabe ist die Erfindung durch die technische Lehr des Anspruches 1 gekennzeichnet.

Wesentliches Merkmal ist, dass die Ausnehmung für das das faseroptische Messelement als umlaufender Ringkanal ausgebildet ist, in dem sich das faseroptische Messelement als Bündel von Lichtleiterkabeln oder als Lichtleitermatte über den gesamten Umfang des Ringkanals erstreckt/-en und dessen gesamten Querschnitt ausfüllt/-en.

Ein Vorteil ist, dass man erfindungsgemäß im Bereich eines umlaufenden, sich über den gesamten Umfang des Silos erstreckenden Ringkanal ein faseroptisches Messelement anordnet, welches die Verformung dieses umlaufenden Ringkanals erfasst und in ein elektrisches Signal umsetzt.

Damit wird eine unmittelbar integrierende Messung in diesem Ringkanal vorgenommen, denn das faseroptische Messelement erfasst unmittelbar die Verformungskräfte, die auf den Ringkanal einwirken und die somit auf das faseroptische Messelement übertragen werden.

Hierbei ist wesentlich, dass das faseroptische Messelement die Querdruckabhängigkeit der faseroptischen Leitfähigkeit bei der Verformung des Ringkanals erfasst.

Faseroptische Systeme eignen sich als örtlich verteilte Mess-Sensoren. Die im Bereich des Ringskanals oder der ringförmigen Ausnehmung auf die Lichtwellenleiter einwirkenden Druck- und Zugkräfte können auf die Glasfaser einwirken und die Eigenschaften der Lichtleitung in der Faser lokal ändern. Infolge der Dämpfung des Lichtes in den Quarzglasfasendurchstreuung kann der Ort einer äußeren physikalischen Einwirkung festgestellt werden, so dass der Lichtwellenleiter als linearer Sensor eingesetzt werden kann.

Zur Druck- und Zugmessung mit Lichtwellenleitern aus Quarzglas eignet sich besonders der sogenannte Raman-Effekt. Das Licht in der Glasfaser streut an mikroskopisch kleinen Dichteschwankungen, die kleiner als die Wellenlänge sind. In der Rückstreuung findet man neben dem elastischen Streuanteil (Rayleigh-Streuung) auf der gleichen Wellenlänge wie das eingestreute Licht, auch zusätzliche Komponenten auf anderen Wellenlängen, die mit der Molekülschwingung und somit mit den lokalen Druck- und Zugkräften, die auf die Glasfaser wirken, gekoppelt sind (Raman-Streuung).

Das erfindungsgemäße faseroptische Gewichtsmesssystem basiert also auf der Verformung eines die Druck- und Gewichtskräfte des Silos aufnehmenden Ringkanal, der wahlweise im Standring, im Fundamentring oder in einem separaten Liegering angeordnet werden kann.

Wichtig hierbei ist, dass nun ringsumlaufend, ohne Unterbrechung, die gesamte Gewichtskraft der Silozarge auf diesen Ringkanal übertragen wird und somit auch ringsumlaufend die auf den Ringkanal ausgeübte, durch das Gewicht des Silos bedingte Verformungskraft.

Daher ist nicht mehr - wie beim Stand der Technik - eine aufwendige Verstärkung am Silo bedingt durch punktuell angeordnete Wägemesszellen erforderlich. Im Vergleich zur volumetrischen Gewichtsmessung (Ultraschall, Radar, Mikrowelle und Silopilot) ist keine Umrechnung des Volumens zur Gewichtsbestimmung notwendig.

Die Gewichtsmessung ist produktunabhängig und Störsignale durch Staub oder Einbauten im Silo können nicht entstehen.

Das faseroptische Druck- und Verformungsmesssystem ist auch im Ex-Bereich ohne Weiteres einsetzbar, das keinerlei elektrische Energie am Messort notwendig ist.

An der Auswerteeinheit können frei wählbare elektrische Schnittstellen vorgesehen werden und das gesamte System ist korrosionsfest. Es ist für alle Siloabmessungen geeignet, und das Silo und der Standring können aus unterschiedlichen Materialien bestehen oder auch aus gleichartigen Materialien, wie beispielsweise Aluminium, Edelstahl, Stahl oder GFK.

Auf die besondere Konstruktion der Ableitung der Gewichtskräfte des Silos auf die Aufstellfläche kommt es hierbei nicht an. Es kann die Druckkraft auf ein Fundament, auf ein Stahlbau, auf Rohrfüße oder Pratzen ermittelt werden. Wichtig ist, dass der faseroptische Lichtwellenleiter als einzelnes Lichtleiterkabel ausgebildet sein kann oder auch aus einem Bündel von Lichtleiterkabeln oder auch aus einer Lichtleitermatte, bei der die einzelnen Lichtleiterkabel in einer Gewebestruktur gebunden sind.

Der schematische Aufbau eines die Verformungskräfte in einem Ringkanal messenden Systems besteht aus einem Auswertegerät mit Frequenzgenerator, Laserquelle, optischem Modul, Empfänger- und Mikroprozessoreinheit sowie einem LWL-Kabel (Quarzglasfaser) als linienförmiger Druckaufnehmer.

Entsprechend dem GFDR-Verfahren wird der Laser innerhalb eines Messzeitintervalls in der Intensität sinusförmig moduliert und in der Frequenz gechirpt.

Das frequenzmodulierte Laserlicht wird in den LWL eingekoppelt. An jedem Ort entlang der Faser entsteht Raman-Streulicht, das in allen Raumrichtungen streut, bedingt durch die querdruckabhängige Veränderung der faseroptischen Leitfähigkeit des LWL.

Ein Teil des Raman-Streulichtes erreicht in Rückwärtsrichtung das Auswertegerät. Das rückgestreute Licht wird spektral gefiltert und in den Messkanälen mittels Fotodetektoren in elektrische Signale gewandelt, verstärkt und elektronisch weiterverarbeitet. Der Mikroprozessor führt die Berechnung der Fourier-Transformation durch. Als Zwischenergebnis erhält man die Raman-Rückstreukurven als Funktion der Kabellänge. Die Amplituden der Rückstreukurven sind proportional zur Intensität der jeweiligen Raman-Streuung. Aus dem Verhältnis der Rückstreukurven ergibt sich somit die über die gesamte Länge der Silozarge gegebenen Gewichts- oder Druckkraft auf das LWL-Kabel.

Ein solcher Lichtwellenleiter-Sensor hat den Vorteil, dass er passiv und streckend neutral ist. Es findet keine Beeinflussung durch Temperaturänderungen statt, und es ist bei kleinem Volumen ein geringes Gewicht gegeben. Ferner ist das LWL-Kabel flexibel und einfach verlegbar. Der Einbau kann auch an später nicht mehr zugänglichen Stellen erfolgen. Der Messaufbau ist unempfindlich gegen elektromagnetische Störungen, und es finden keine Potentialverschleppungen und Erdschleifen statt, wie es bei anderen Messsensoren (DMS) der Fall ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert die Seitenansicht eines Standzargensilo mit einer Wiegemesseinrichtung nach der Erfindung
- Figur 2:: schematisiert vergrößert den Fußbereich des Silos nach Figur 1
- Figur 3:: eine erste Ausführungsform der Druckübertragung der Gewichtskraft des Silos auf das Messprofil
- Figur 4:: eine zweite Ausführungsform der Druckübertragung der Gewichtskraft des Silos auf den Standring durch Durchbiegung des Messprofils
- Figur 5:: eine vergrößerte Darstellung des Messprofils nach Figur 3 mit weiteren Einzelheiten
- Figur 6:: eine vergrößerte Darstellung des Messprofils nach Figur 4 mit weiteren Einzelheiten
- Figur 7:: zwei verschiedene Ausführungsformen mit Anbringung des Ringkanals, in dem die Verformung gemessen wird
- Figur 8:: ein gegenüber Figur 7 abgewandeltes Ausführungsbeispiel
- Figur 9:: ein gegenüber den Figuren 7 und 8 abgewandeltes Ausführungsbeispiel
- Figur 10:: die Darstellung der Anordnung des faseroptischen Messelementes in Verbindung mit einer Klemmeinrichtung
- Figur 11:: eine gegenüber Figur 10 abgewandelte Ausführungsform
- Figur 12:: eine Ausführungsform ähnlich wie Figur 3 mit weiteren Einzelheiten
- Figur 13:: eine Ausführungsform ähnlich wie Figur 4 mit Darstellung weiterer Einzelheiten
- Figur 14:: schematisiert einen Teilschnitt durch den Standring des Silos mit der Darstellung des umlaufenden Hohlkanals

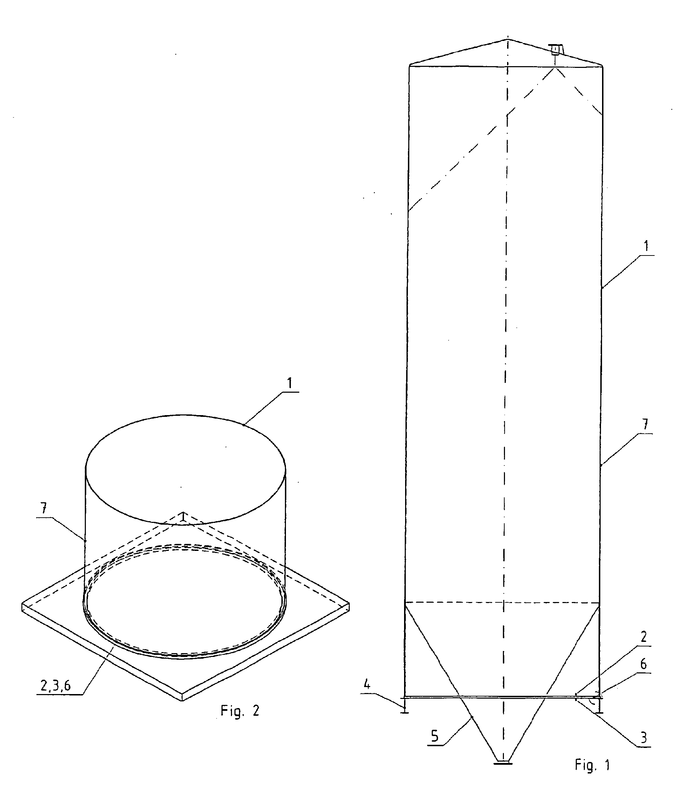

In Figur 1 ist ein Silobehälter 1 dargestellt, der als Silozarge ausgebildet ist und eine umlaufende, in sich geschlossene Silowand 7 aufweist. Er ist mit einem Schüttgut befüllt, dessen Gewicht unmittelbar bestimmt werden soll.

In an sich bekannter Weise ist am unteren Teil ein Auslauf 5 angeordnet, über den das Schüttgut ausläuft. Ferner ist sein unterer Teil mit einem Standring 2 versehen, welcher die Silowand 7 lastübertragend ringsumlaufend aufnimmt. Der Standring 2 seinerseits ist über einen fest auf eine Abstützung 4 ruhenden Fundamentring 3 getragen.

Erfindungsgemäß ist nun im Bereich des Standringes 2 und/oder des Fundamentringes 3 eine Wiegemesseinrichtung 6 angeordnet, die nachfolgend näher beschrieben wird.

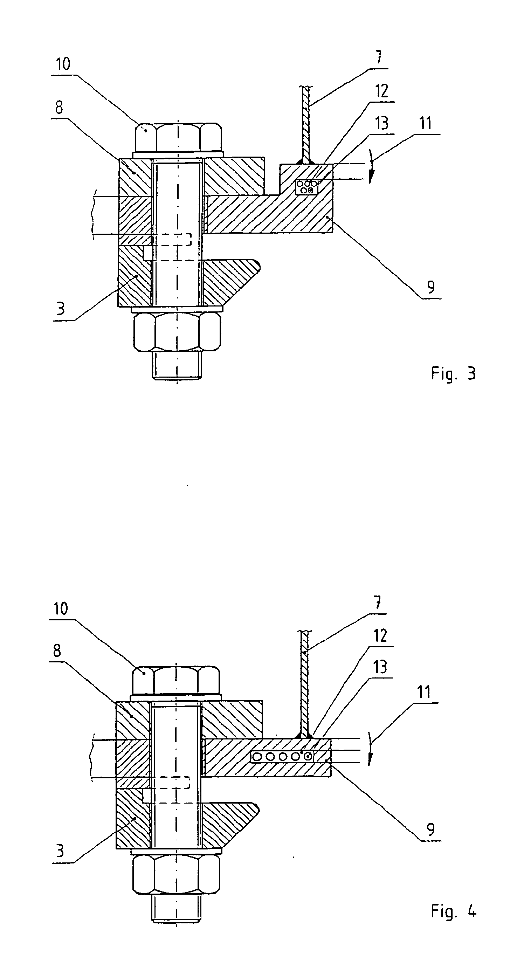

Gemäß Figur 3 besteht die Wiegemesseinrichtung 6 aus einem Messprofil 9, welches über eine Klemmschraube 10 und ein Klemmelement 8 am Fundamentring 3 eingeklemmt ist und wobei die umlaufende Silowand 7 auf dem als umlaufendes Profil ausgebildeten Messprofil 9 lastübertragend aufliegt.

Damit verbiegt sich das am freien Ende eingespannte Messprofil 9 in Pfeilrichtung 11 nach unten, wodurch es zu einer Verformung des im Messprofil 9 angeordneten Hohlkanals 12 kommt.

In diesem Hohlkanal 12 ist nun das erfindungsgemäße, faseroptische Messelement 13 angeordnet, welches mindestens soweit den Hohlkanal 12 ausführt, dass jegliche Verformung der Wandungen des Hohlkanals 12 als Querverformung auf das faseroptische Messelement 13 einwirken.

Somit erfasst das faseroptische Messelement 13 die Querdruckabhängigkeit der faseroptischen Leitfähigkeit bei der Verformung dieses Hohlkanals 12 im Messprofil 9.

Als Alternative zur Figur 3 ist in Figur 4 dargestellt, dass anstatt einer Stauchung des Messprofils 9 auch eine direkte Durchbiegung des Messprofils 9 erfasst werden kann. Auch hier ist im Bereich des freien biegbaren Teils des Messprofils 9 ein etwa rechteckförmiger Hohlkanal 12 angeordnet, in dem das faseroptische Messelement 13 angeordnet ist. Es wird hierbei (sowohl in Figur 3 als auch in Figur 4 bevorzugt, wenn das faseroptische Messelement 13 den gesamten Querschnitt des Hohlkanals 12 ausfüllt. Hierauf ist die Erfindung jedoch nicht beschränkt. In diesen und allen anderen Ausführungsbeispielen kann es auch vorgesehen sein, dass der gesamte Hohlkanal 12 mit einem Fluid (Gas oder Flüssigkeit) gefüllt ist und dass das faseroptische Messelement 13 in diesen mit Fluid gefüllten Kanal eingebettet ist, so dass auch auf diese Weise eine Druckveränderung im Hohlkanal 12 unmittelbar als Verformungsdruck auf das faseroptische Messelement 13 wirkt.

Wichtig ist in den beiden Ausführungsbeispielen nach Figur 3 und 4, dass die von oben nach unten gehende Gewichtskraft, die von der Silowand 7 auf das biegbare Messprofil 9 eingeleitet wird, zu einer Verformung des Hohlkanals 12 führt.

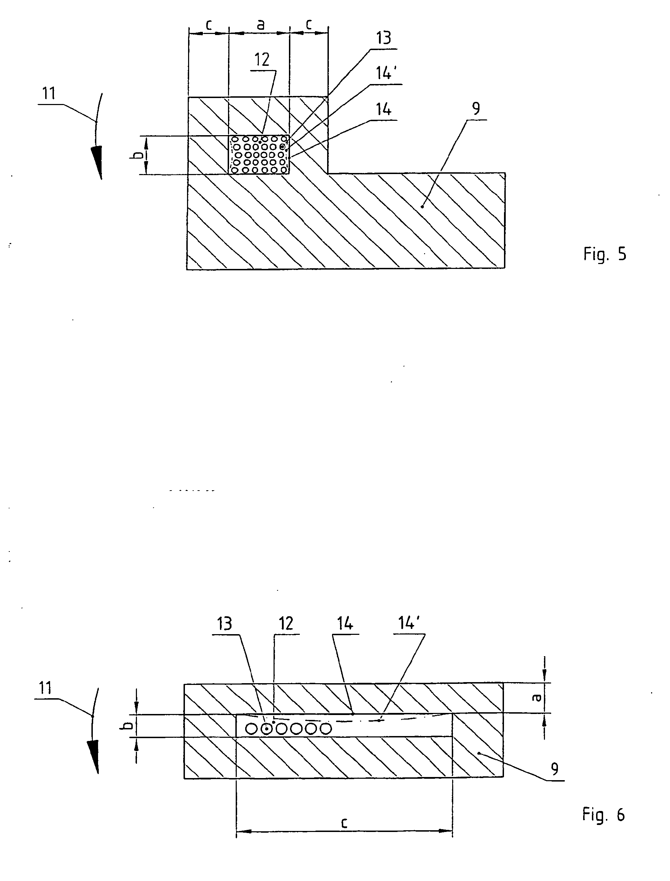

Im gezeigten Ausführungsbeispiel ist dieser Hohlkanal als Rechteckprofil ausgebildet, welches von dem erfindungsgemäßen faseroptischen Messelement 13 ausgefüllt ist. Dies ist in Figuren 5 und 6 dargestellt.

Jegliche Verformungskraft, die in Pfeilrichtung 11 auf das Messprofil 9 eingeleitet wird, führt zu einer Verformung der Wandungen 14 in die Position 14', so dass damit das faseroptische Messelement 13 zusammengequetscht wird und hiermit die optische Leitfähigkeit des Messelementes 13 verändert wird.

Gleiches gilt für das Ausführungsbeispiel nach Figur 6, wo die Druckkraft von der Silowand 7 direkt in vertikaler Richtung (in Pfeilrichtung 11) mittig auf den Hohlkanal 12 eingeleitet wird, der somit seine Wandung 14 bogenförmig in Form der Wandung 14' verformt.

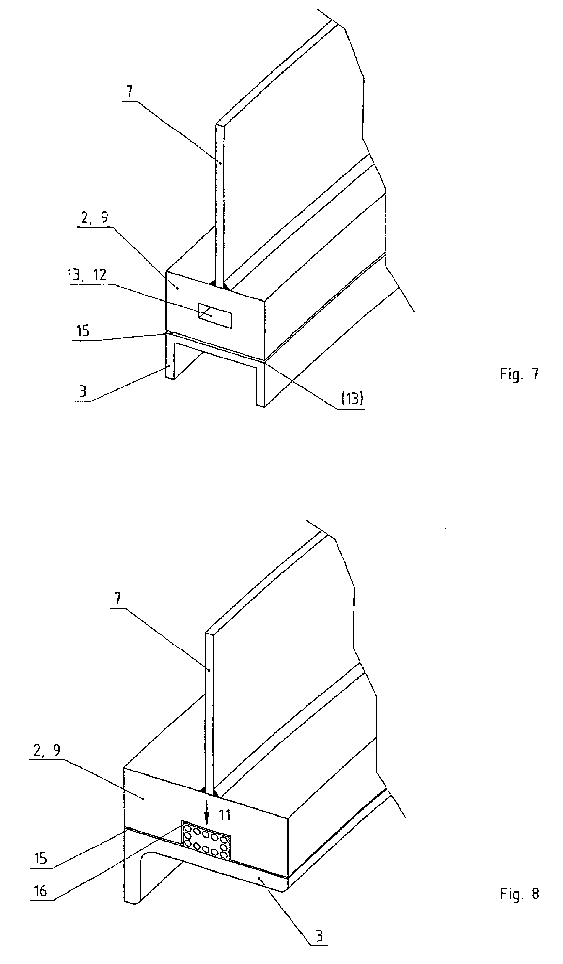

Die Figur 7 zeigt zwei verschiedene Ausführungsbeispiele der Anordnung des Hohlkanals 12 und des darin eingebetteten faseroptischen Messelementes 13.

In der ersten Ausführungsform ist dargestellt, dass der Hohlkanal 12 unmittelbar im Standring 2 ausgebildet ist und dass die Silowand 7 des Silobehälters 1 auf dem Standring 2 aufsitzt.

In der zweiten Ausführungsform nach Figur 7 ist dargestellt, dass das faseroptische Messelement 13 im Zwischenraum 15 zwischen der Unterseite des Standrings 2 und der Oberseite des Fundamentrings 3 eingebaut sein kann. Hierbei wird es bevorzugt, wenn das faseroptische Messelement 13 als Lichtleitermatte ausgebildet ist und mehrere parallel nebeneinander angeordnete LWL-Kabel durch querverlaufende Faserbindungen auf Abstand gehalten werden, um so eine Lichtleitermatte zu bilden.

Die Figur 8 zeigt als weitere Ausführungsform, dass der Ringkanal auch als einseitig offener Profilkanal 16 ausgebildet sein kann, auf den die Druckkraft der Silowand 7 mittig in Pfeilrichtung 11 eingeleitet wird und deshalb der Profilkanal 16 sich aufspreizend durchbiegt.

Auch bei dieser Ausführungsform ist vorgesehen, dass entweder das faseroptische Messelement 13 im Profilkanal 16 angeordnet ist oder in einen Zwischenraum 15, der zwischen der Unterseite des Standrings 2 und der Oberseite des Fundamentrings 3 ausgebildet ist.

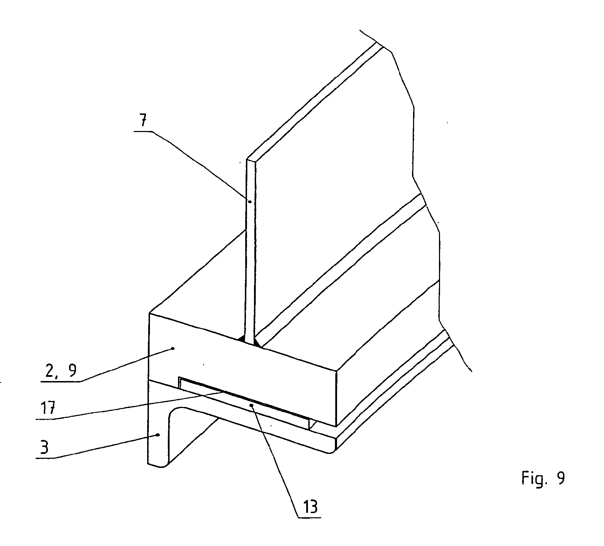

Die Figur 9 zeigt, dass der Ringkanal auch als einseitig offene Ausnehmung 17 vorgesehen sein kann, die beispielsweise an der Unterseite des Standrings 2 ringsumlaufen eingeformt ist. Diese Ausnehmung 17 kann auch stirnseitig entweder geöffnet oder geschlossen sein.

Wichtig ist jedenfalls, dass in dieser Ausnehmung 17 das faseroptische Messelement 13 angeordnet ist, welches somit die Druckkräfte zwischen der Unterseite des Standrings 2 und der Oberseite des Fundamentrings 3 aufnimmt, so dass dessen optische Leitfähigkeit damit verändert wird.

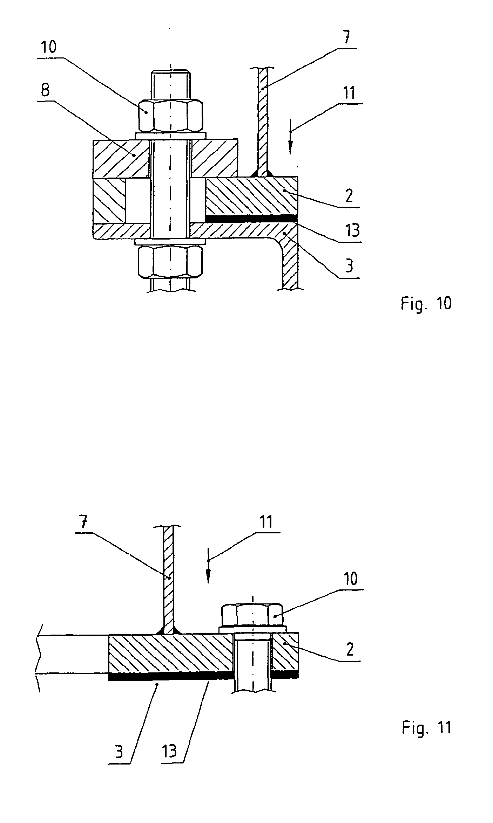

Die Figuren 10 und 11 zeigen ähnliche Ausführungsbeispiele wie die Figuren 3 und 4.

Hierbei ergibt sich eine leichte Nachrüstung, denn gemäß Figur 10 kann mit dem Klemmelement, bestehend aus Klemmschraube 10 und der Pratze 8, nachträglich das faseroptische Messelement 13 zwischen dem Standring 2 und dem Fundamentring 3 eingebaut werden.

Gleiches gilt für die Darstellung in Figur 11, wo erkennbar ist, dass sich das faseroptische Messelement 13 auch über die gesamte Unterseite des Standrings 2 erstrecken kann.

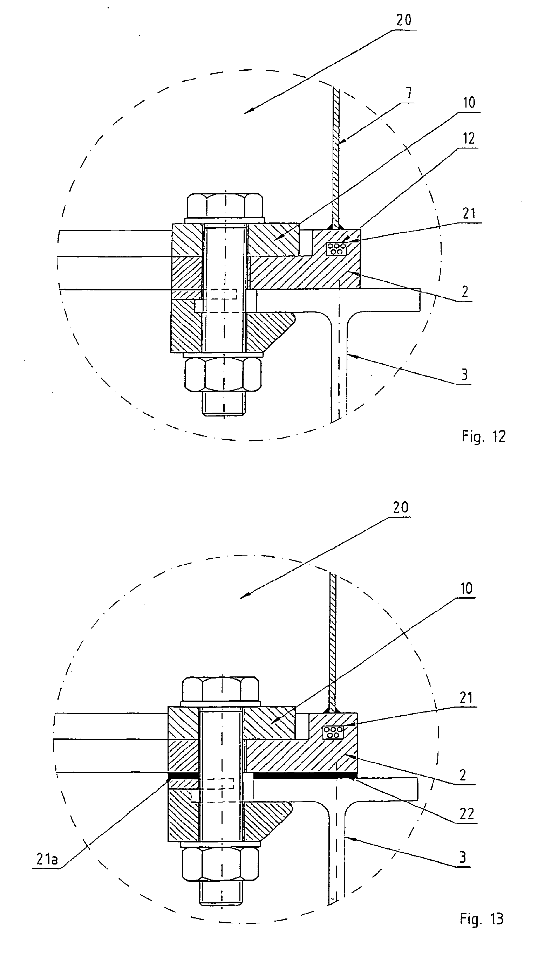

Die Figur 12 zeigt, dass der Hohlkanal 12 im biegbaren Teil des Standrings 2 angeordnet ist Die Figur 13 zeigt zwei verschiedene Ausführungsformen, wobei das faseroptische Messelement entweder im Hohlkanal 12 nach Figur 12 angeordnet sein kann, aber auch an der Unterseite zwischen dem Standring 2 und der Oberseite des Fundamentrings 3 und ebenso - in einer weiteren Ausführungsform - im Bereich der Klemmeinrichtung, wo ein druckübertragendes Medium 21 a angeordnet ist.

Dies gilt auch für die Figur 13 (rechte Darstellung), welche zeigt, dass das faseroptische Messelement 13 unmittelbar in Form eines Rechteckquerschnittes in einem druckübertragenden Medium 21 eingebettet sein kann.

In allen Fällen ist wichtig, dass die Silozarge 20 unmittelbar verformend auf das faseroptische Messelement 13 ringsumlaufend wirkt, so dass dieses eine integrierende, sich über den gesamten Umfang der Silozarge erstreckende Kraft- oder Gewichtsmessung durchführt.

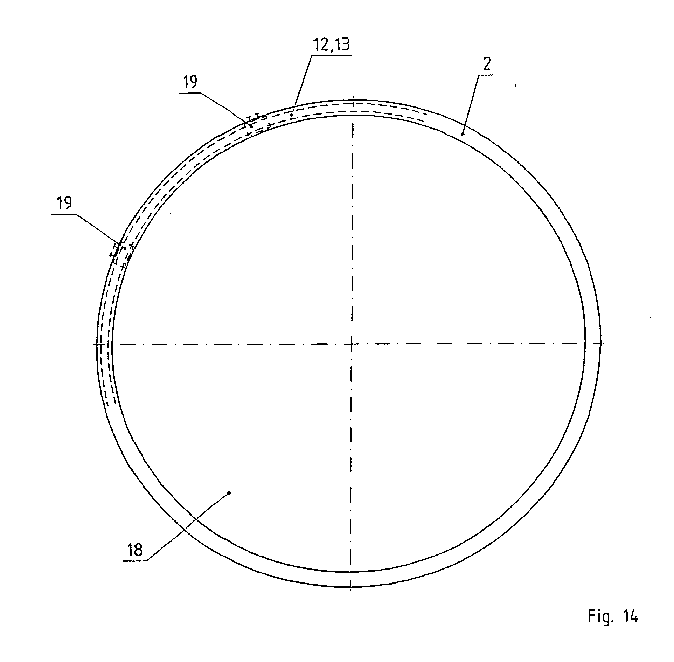

Die Figur 14 zeigt von oben schematisiert einen Teilschnitt durch den Standring 2, wo erkennbar ist, dass eine integrierende Messung über die Grundfläche 18 des Standrings 2 dadurch stattfindet, dass sich über den gesamten Umfang des Standrings 2 der Hohlkanal 12 erstreckt, in dem das faseroptische Messelement 13 ringsumlaufend als einheitliches Messelement angeordnet ist.

Es kann auch - wie in Figur 14 gezeigt - das Messelement unterbrochen ausgebildet sein, so dass zwei oder mehr Messelemente vorhanden sind, die möglichst aneinander anschließen, wobei demzufolge dann hierdurch hintereinander folgende Messwertaufnehmer 19 gebildet sind.

Dieses Ausführungsbeispiel zeigt somit, dass es nicht lösungsnotwendig ist, ein einziges Messelement 13 ringsumlaufend im Ringkanal anzuordnen. Es kann ebenso vorgesehen werden, mehrere getrennt voneinander ausgebildete Messelemente 13 vorzusehen und jeden Anschluss des Messelementes als eigener Messwert-Aufnehmer 19 nach außen zu führen. Es handelt sich also um einen in mehrere Ringsegmente aufgeteilten Ringkanal, wobei in jedem Ringsegment ein solches faseroptisches Messelement angeordnet ist.

Auch hier kann es vorgesehen sein, dass ein druckübertragendes Medium 22 im gesamten Ringkanal (Hohlkanal 12) vorgesehen ist, in den ein oder mehrere faseroptische Messelemente 13, die hintereinanderfolgend angeordnet sind, eingebettet sind.

Ein besonderer Vorteil der faseroptischen Messelemente ist deren Unabhängigkeit von der Umgebungstemperatur. Nachdem mit einem solchen faseroptischen Messelement eine unmittelbare Messung der Temperatur möglich ist, kann die im Ringkanal stattfindende, mechanische Verformung unmittelbar mit einer Temperaturmessung im faseroptischen Messelement 13 verknüpft werden. Damit wird der störende Temperatureinfluss eliminiert.

Im Rahmen der vorliegenden Erfindung wird auch noch für eine andere Ausführungsformschutz nachgesucht, die sowohl in Alleinstellung als auch in Kombination mit allen vorher genannten Merkmalen unter Schutz gestellt werden soll.

Es handelt sich darum, dass in der nachfolgend beschriebenen Ausführungsform nicht die Verformungskraft in einem Ringkanal eines Hohlprofils über das faseroptische Element 13 erfasst wird, sondern dass die Druckspannung auf die Verbindungsschrauben erfasst wird, welche den oberen Teil des Silo-Behälters 1 mit dem Fundamentteil 2, 3, 4 verbinden.

In den Figuren 3,4, 10,11 sind Klemmschrauben 10 dargestellt, welche zur Verbindung des Standrings 2 mit dem Fundamentring 3 dienen. Erfindungsgemäß ist nun vorgesehen, das Verbindungsschrauben vorhanden sind, welche den Standring 2 mit dem Fundamentring 3 verbinden. Ebenso können andere Verbindungsschrauben vorhanden sein, welche den Fundamentring 3 mit einer bodenseitigen Abstützung 4 verbinden. Dieses Ausführungsbeispiel unterscheidet sich deshalb von dem Ausführungsbeispiel nach dem Zeichnungsfiguren 1 dieses 14 dadurch, dass das Gewicht des Silobehälters nicht ringsumlaufend oder segmentiert lastübertragend auf einen Ringkanal wirkt, dessen Verformungskraft messtechnisch erfasst wird.

Das vorliegende Ausführungsbeispiel bezieht sich vielmehr darauf, dass Verbindungsschrauben zur Verbindung des Silobehälters 1 mit dem Standring 2 und/oder dem Fundamentring 3 und/oder der Abstützung 4 vorhanden sind und dass die Pressekraft auf alle Verbindungsschrauben erfasst wird.

Zu diesem Zweck ist vorgesehen, dass unter dem Kopf oder unter dem Bolzen der Verbindungsschrauben ein scheibenförmiges, faseroptisches Messelement 13 angeordnet ist, welches die Zug- und/oder Stauchkraft auf die Verbindungsschrauben erfasst. Somit sind eine Reihe von faseroptischen Messwertaufnehmern 13 als scheibenförmige Unterlegscheiben ausgebildet, die unter dem Kopf oder an der Mutter der jeweiligen Verbindungsschrauben angeordnet sind. Somit wird jede Zug- oder Druckkraft auf die jeweilige Verbindungsschrauben erfasst. Aus der Vielzahl der vorhandenen faseroptischen Elemente 13 kann somit ein Summensignal gebildet werden, welches die Zug- und oder Strauchkraft über alle Verbindungsschrauben als Integral angezeigt. Dieses Summensignal ist somit ein Maß für die Druckkraft des Silobehälters 1 auf die bodenseitige Abstützung 4 und somit ein Maß für das Gewicht der Silofüllung.

### Zeichnungslegende

- 1: Silobehälter
- 2: Standring
- 3: Fundamentring
- 4: Abstützung
- 5: Auslauf
- 6: Wiegemesseinrichtung
- 7: Silowand
- 8: Klemmelement
- 9: Messprofil
- 10: Klemmschraube
- 11: Pfeilrichtung
- 12: Hohlkanal
- 13: Faseroptisches Messelement
- 14: Wandung Hohlquerschnitt 14'
- 15: Zwischenraum
- 16: Profilkanal
- 17: Ausnehmung
- 18: Grundfläche
- 19: Messwand-Aufnehmer
- 20: Silozarge
- 21: druckübertragendes Medium 21a
- 22: druckübertragendes Medium

## Patentansprüche

1. Vorrichtung zur Gewichtsbestimmung des Siloinhaltes eines Standzargensilos mit mindestens einem Messwertaufnehmer (19), bestehend aus einer umlaufenden, geschlossenen im Wesentlichen rohrförmigen eine Silowand (7) aufweisende Silozarge (20), die bodenseitig auf einem mindestens teilweise am Umfang umlaufenden Standring (2) ruht, der die Last seinerseits auf einem mindestens teilweise umlaufenden Fundamentring (3) überträgt, wobei im Bereich der Lastübertragung zwischen der Silozarge (20) und dem Fundamentring (3) eine Ausnehmung (17) angeordnet ist, auf den die Druck- oder Gewichtskraft der Silozarge (20) verformend einwirkt und in der Ausnehmung (17) mindestens ein faseroptisches Messelement (13) angeordnet ist, welches die Verformung der Ausnehmung (17) erfasst und in ein elektrisches Signal umsetzt, **dadurch gekennzeichnet, dass** die Ausnehmung (17) als umlaufender Ringkanal (12, 15, 16, 17) ausgebildet ist, in dem sich das faseroptische Messelement (13) als Bündel von Lichtleiterkabeln oder als Lichtleitermatte über den gesamten Umfang des Ringkanals (12, 15, 16, 17) erstreckt/-en und dessen gesamten Querschnitt ausfüllt/-en.

2. Vorrichtung nach Anspruch 1, **dadurch gekennzeichnet, dass** der Ringkanal (12, 15, 16, 17) als geschlossener Hohlkanal (12) ausgebildet ist.

3. Vorrichtung nach Anspruch 1, **dadurch gekennzeichnet, dass** der Ringkanal (12, 15, 16, 17) als geschlossener oder halboffener Profilkanal (16) ausgebildet ist.

4. Vorrichtung nach einem der Ansprüche 1 bis 3, **dadurch gekennzeichnet, dass** der Ringkanal (12, 15, 16, 17) als einseitig offene Ausnehmung (17) ausgebildet ist.

5. Vorrichtung nach einem der Ansprüche 1 bis 4, **dadurch gekennzeichnet, dass** der Ringkanal (12, 15, 16, 17) im Bereich des Standrings (2) angeordnet ist.

6. Vorrichtung nach einem der Ansprüche 1 bis 4, **dadurch gekennzeichnet, dass** der Ringkanal (12, 15, 16, 17) im Bereich des Fundamentrings (3) angeordnet ist.

7. Vorrichtung nach einem der Ansprüche 1 bis 4, **dadurch gekennzeichnet, dass** der Ringkanal (12, 15, 16, 17) im Bereich zwischen dem Standring (2) und dem Fundamentring (3) angeordnet ist.

8. Vorrichtung nach einem der Ansprüche 1 bis 7, **dadurch gekennzeichnet, dass** die Silowand (7) vertikal über dem Ringkanal (12, 16) angeordnet ist, deren Wandstärke kleiner als die horizontale Breite des Ringkanals (12, 15, 16, 17) ist.

## Claims

1. Device for determining the weight of the content of a silo of a standing frame silo with at least one measured value sensor (19), consisting of a peripheral, closed, substantially tubular silo frame (20), which has a silo wall (7) and, on the base side, rests on a standing ring (2), which at least partly runs round the periphery and in turn transmits the load to an at least partly peripheral base ring (3), a recess (17) being arranged in the region of the load transmission between the silo frame (20) and the base ring (3), on which the pressure or weight force of the silo frame (20) acts in a deforming manner, and at least one fibre-optic measuring element (13), which detects the deformation of the recess (17) and converts it into an electrical signal, being arranged in the recess (17), **characterised in that** the recess (17) is configured as a peripheral annular channel (12, 15, 16, 17), in which the fibre-optic measuring element (13) extends as a bundle of optical fibre cables or as an optical fibre mat over the entire periphery of the annular channel (12, 15, 16, 17) and fills the entire cross section thereof.

2. Device according to claim 1, **characterised in that** the annular channel (12, 15, 16, 17) is configured as a closed hollow channel (12).

3. Device according to claim 1, **characterised in that** the annular channel (12, 15, 16, 17) is configured as a closed or half-open profile channel (16).

4. Device according to any one of claims 1 to 3, **characterised in that** the annular channel (12, 15, 16, 17) is configured as a recess (17) that is open on one side.

5. Device according to any one of claims 1 to 4, **characterised in that** the annular channel (12, 15, 16, 17) is arranged in the region of the standing ring (2).

6. Device according to any one of claims 1 to 4, **characterised in that** the annular channel (12, 15, 16, 17) is arranged in the region of the base ring (3).

7. Device according to any one of claims 1 to 4, **characterised in that** the annular channel (12, 15, 16, 17) is arranged in the region between the standing ring (2) and the base ring (3).

8. Device according to any one of claims 1 to 7, **characterised in that** the silo wall (7) is arranged vertically over the annular channel (12, 16), the wall thickness of which is smaller than the horizontal width of the annular channel (12, 15, 16, 17).

## Revendications

1. Dispositif pour déterminer le poids du contenu d'un silo à corps autoporteur avec au moins un capteur de valeur de mesure (19), composé d'un corps de silo (20) circulaire, fermé, globalement tubulaire, présentant une paroi de silo (7) et posé côté sol sur un anneau d'appui (2) qui est au moins en partie circulaire sur sa circonférence et qui transmet quant à lui la charge à un anneau de fondement (3) au moins en partie circulaire, étant précisé qu'il est prévu, dans la zone de la transmission de charge entre le corps de silo (20) et l'anneau de fondement (3), un creux (17) sur lequel la force de la pression ou du poids du corps de silo (20) a une action déformante, et qu'il est prévu dans le creux (17) au moins un élément de mesure à fibre optique (13) qui détecte la déformation du creux (17) et la convertit en signal électrique, **caractérisé en ce que** le creux (17) est conçu comme un conduit annulaire circulaire (12, 15, 16, 17) dans lequel l'élément de mesure à fibre optique (13) s'étend sous la forme d'un faisceau de câbles de conducteurs optiques ou d'un mat de conducteur optique sur toute la circonférence du conduit annulaire (12, 15, 16, 17) et remplit toute la section transversale de celui-ci.

2. Dispositif selon la revendication 1, **caractérisé en ce que** le conduit annulaire (12, 15, 16, 17) est conçu comme un conduit creux fermé (12).

3. Dispositif selon la revendication 1, **caractérisé en ce que** le conduit annulaire (12, 15, 16, 17) est conçu comme un conduit profilé fermé ou semi-ouvert (16).

4. Dispositif selon l'une des revendications 1 à 3, **caractérisé en ce que** le conduit annulaire (12, 15, 16, 17) est conçu comme un creux (17) ouvert d'un côté.

5. Dispositif selon l'une des revendications 1 à 4, **caractérisé en ce que** le conduit annulaire (12, 15, 16, 17) est disposé dans la zone de l'anneau d'appui (2).

6. Dispositif selon l'une des revendications 1 à 4, **caractérisé en ce que** le conduit annulaire (12, 15, 16, 17) est disposé dans la zone de l'anneau de fondement (3).

7. Dispositif selon l'une des revendications 1 à 4, **caractérisé en ce que** le conduit annulaire (12, 15, 16, 17) est disposé dans la zone entre l'anneau d'appui (2) et l'anneau de fondement (3).

8. Dispositif selon l'une des revendications 1 à 7, **caractérisé en ce que** la paroi de silo (7) est disposée à la verticale sur le conduit annulaire (12, 16) et son épaisseur de paroi est inférieure à la largeur horizontale du conduit annulaire (12, 15, 16, 17).
